# EUROPEAN PATENT SPECIFICATION

(11) **EP 0 678 989 B1**
(45) Date of publication and mention of the grant of the patent: **16.03.2005**
(21) Application number: 95200944.7
(22) Date of filing: 14.04.1995
(51) Int. Cl.: H04J 3/06

(54) **Method and arrangement for the timing of digital signal transmission in a TDMA PON system**
Anordnung und Verfahren zur Steuerung der Takt bei digitalen Datenübertragung in einem passiven optischen TDMA system
Méthode et dispositif pour régler l'horloge de transmission de signaux numériques dans un système AMRT optique passif

(30) Priority: 21.04.1994 IT MI940768
(43) Date of publication of application: 25.10.1995
(73) Proprietor: Italtel S.p.A., 20019 Settimo Milanese (IT); Siemens AG, 80333 München (DE)
(72) Inventor: Profumo, Alberto, 20147 Milan (IT); Baldo, Paoli, 28065 Cerano (NO) (IT); D'Ascoli, Lucio, 34132 Udine (IT)
(74) Representative: Giustini, Delio

(56) References cited:
- EP-A- 0 460 398
- DE-A- 3 600 795
- US-A- 3 665 405
- US-A- 4 411 007
- PATENT ABSTRACTS OF JAPAN vol. 016, no. 134 (E-1185), 6 April 1992 & JP 03 296340 A (MITSUBISHI ELECTRIC CORP), 27 December 1991,

## Description

### Field of the Invention

The present invention relates to the field of communication systems based on optical networks and more precisely to a method and an arrangement for synchronizing TDMA (Time Division Multiple Access) digital signal transmissions in a PON (Passive Optical Network) system.

As it is well known, PON systems are characterized by the fact that a single OLT (Optical Line Termination) is interconnected with a given number of ONU (Optical Network Units) through a passive optical network implemented by means of monomodal optical fibres and passive optical components.

The line termination OLT is a device generally positioned in communication exchanges.

The network unit ONU is on the contrary a device placed close to the user. ONU devices allow the users to have access to the optical network through different kind of interfaces.

Point-to-multipoint PON systems are capable to support both the services of the B-ISDN network (Broadband Integrated Service Digital Network) and interactive and distribution wide band systems, such as television services.

In PON systems the same optical signal emitted by the OLT termination reaches all the network units ONU, while in the opposite direction, optical signals emitted by each ONU, join to form a unique optical signal received by the OLT.

Transmissions addressed by each network unit ONU toward the OLT termination is performed by means of a TDMA (Time Division Multiple Access) communication protocol.

Using this TDMA protocol, the transmission made by each network unit ONU is allowed in well defined time intervals only, in order to avoid that at a same instant, signals coming from two o more different ONU can overlap (and therefore cancel each other).

This synchronization, defined as "ranging" procedure, is performed sending appropriate synchronism information from the OLT termination to each network unit ONU.

Thanks to this synchronism information, each network unit ONU recognizes the time slot inside which transmissions have to be made.

When performing the ranging procedure, the OLT termination considers time delays introduced by optical fibre paths connecting the termination itself to each network unit ONU.

These time delays are generally different for each network unit ONU since they depend on the different characteristics of optical fibres and different length of transmission paths.

The value of these delays varies also in time according to the temperature of optical fibres in which the signals travel.

At present, due to the ever increasing requirements in terms of bandwidth of communication networks, PON systems are used to transmit digital signals having very high bit-rate, typically 622 Mbit/s.

Since the bit period is extremely reduced (1.6 ns approx.) at these transmission bit-rate, synchronization and timing operations of the different signals assume a great importance for the good operation of the TDMA PON system.

The ranging procedure generally includes three steps, called "coarse ranging", "static ranging" and "fine ranging" respectively.

During the "coarse ranging " step, which is generally performed in the course of installation or maintenance procedure of the PON system, a synchronization with resolution within a 20 bit range is obtained.

The next "static ranging" step, always performed in the course of installation or maintenance procedure of the PON system, allows to reach a resolution in a range of 1 bit.

The last step of "fine ranging" is dynamically performed during the regular operation of the PON system and allows to maintain a resolution within 1 bit range.

During this "fine ranging" step, all delay variations of signals along the fibres, originated by temperature variations, shall be dynamically compensated.

At the present data bit-rate (622 Mbit/s), the implementation of these "ranging" procedures originates a great number of problems, which importance is increased with respect to the past, when data maximum transfer speeds were in the range of 50 Mbit/s.

These problems are essentially due to the high cost and high absorption of energy of electronic components required to process and transmit digital signals at a so high speed.

Difficulties to operate at that speeds are even higher in "static ranging" and "fine ranging" procedures, requiring tolerance margins of only 1 bit.
US 4,411,007 discloses a synchronisation of Time Division Multiple Access (TDMA) bidirectional digital transmission system based on a tree topology network, in which a central station transmit data to and receive data from a plurality of remote stations. In particular this patent deals with the automatic means which enable each remote station to transmit to the central station in the appropriated time instant. Focus of this patent is therefore a method used to change the equalisation delay for the upstream transmission in a high speed transmission system.
According to this method, each remote station is instructed regularly by the central station of the time delay between the remote station and the central station. The remote station stores the time delay and arranges to advance information transmitted by the remote station so as to be received by the central station within the proper position in the frame.
The time delay is measured by the central station by sensing a pattern of bits repetitively transmitted by the remote station and comparing the received pattern with a stored pattern and counting the number of shifts of the received pattern necessary to match the stored pattern. The delay stored by the remote station is tuned to one quarter of a bit to ensure accurate synchronisation.
According to the above, a preferred embodiment of the delay compensation circuit is shown in fig 10 and a second embodiment of the circuit is shown in fig 11. In both cases relevant components are clocked by the received bit clock. This forces the adoption of large and expensive high speed memories with high power consumption.

### Object of the Invention

Object of this invention is to supply a method and a device for synchronizing TDMA digital signal transmission in a PON based system, not requiring for its implementation, a high number of electronic expensive components with high power consumption, such as for instance those implemented by means of the ECL technology.

An additional object of the invention is to supply a method and a device allowing to perform a reliable and safe timing also in presence of important variations of transmission parameters of the TDMA PON system.

### Disclosure of the Invention

The invention achieves said object by providing a method for synchronizing serial digital signal transmissions including a passive optical network connecting point-to-multipoint a line termination to a plurality of network units accessing the network in time division, as disclosed in the method claims.

Is also object of the present invention an arrangement for implementing the synchronization method of the invention, as disclosed in the device claims.

According to the above, it is clear that the invention foresees a modification of the elastic memory read clock phase, in response to the reception of synchronization information issued by the line termination, thus determining the dynamic compensation of variations (in advance or in delay) in the time of signal travelling (at rated speed of 622 Mbit/s) into the fibres due for instance to temperature variations.

Considering that the above mentioned phase correction is made at low speed (that is at a speed which is m times lower than the current data transfer speeds of 622 Mbit/s) it becomes possible to use, according to the mentioned scope, components implemented by means of the CMOS technology which, as already known, have very low consumptions and high reliability.

### Brief Description of the Drawings

The features of the present invention which are believed to be novel are set forth with particularity in the appended claims. The invention, together with further objects and advantages thereof, may be understood with reference to the following description, taken in conjunction with the accompanying drawings, the several figures of which like reference numerals identify like elements, and in which:
Fig. 1 shows the structure of a PON system;
Fig. 2 shows transmission time slots allocated to each network unit by the line termination of the PON system of Fig. 1;
Fig. 3 shows a block diagram representing the structure of the transmission portion of the network unit of Fig. 1;
Fig. 4 shows a diagram representing the timing, with the introduction of a positive time phase shift, of signal exchanged among the different parts of the network unit of Fig. 3;
Fig. 5 shows a diagram representing the timing, with the introduction of a negative time phase shift, of signal exchanged among the different parts of the network unit of Fig. 3;
Fig. 6 shows a diagram of the elastic memory of First-In First-Out type (ELAS_MEM) of Fig. 3;
Fig. 7 shows a diagram indicating the timing of some signals present inside the elastic memory of Fig. 6;
Fig. 8 shows a diagram of the status of space occupied in the elastic memory of Fig. 6 and the timing of some signals present inside this elastic memory.

### Detailed description of an embodiment of the invention

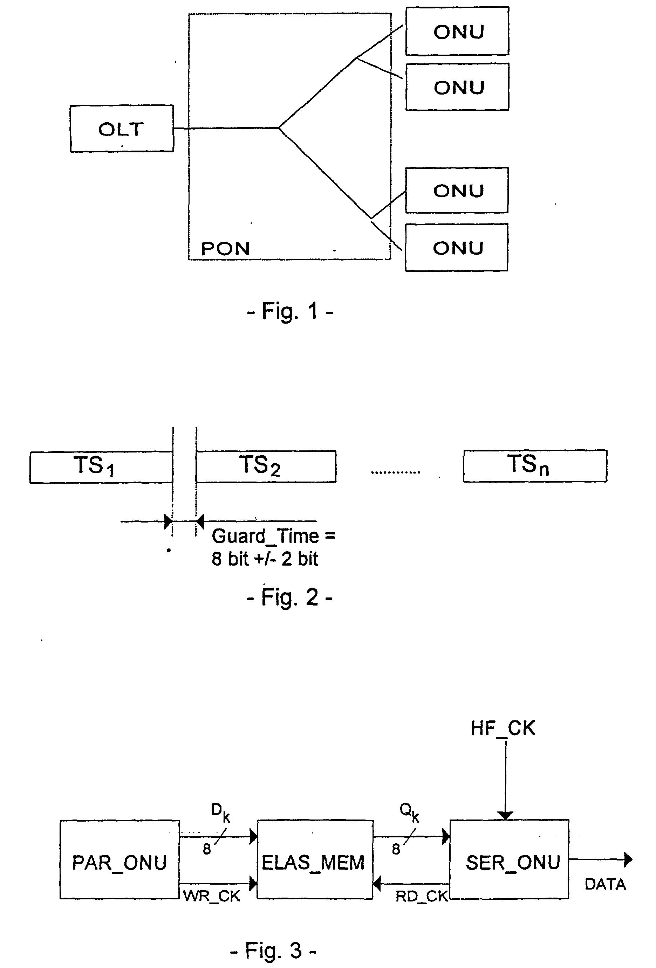

Making reference to Fig. 1, a line termination OLT (Optical Line Termination) is interconnected to a given number of network units ONU (Optical Network Unit) through a passive optical network (PON).

Coinciding to each splitting point of the passive optical network, the optical signal transmitted by the OLT termination is shared on two "sons" branches. Always coinciding to said splitting point, as far as the centripetal transmission (from ONU to OLT) concerns, signals transmitted by each single network units ONU superimpose on the "father" branch segment.

The transmission from the OLT termination towards the network units ONU takes place at 622 Mbit/s speed and in "broadcast" mode, that is in such a way that data transmitted by the line termination OLT reach all the network units ONU.

Each network unit ONU recognize data actually sent to them through the address field analysis contained in the data flow.

The transmission from network units ONU towards the OLT termination takes place through a TDMA type multiplexing technique (Time Division Multiple Access). The TDMA protocol foresees that network units ONU can transmit only in time slots severely established by the OLT termination.

The OLT termination receives signals sent by each network unit ONU and sends an information to each network unit ONU indicating the time instant at which they shall perform the subsequent transmissions, specifying delay values that each ONU shall add in data transmission to the OLT.

Referring to the attached Fig. 2 this information consists in the indication of time slots TS1, TS2, ... TSn, each one dedicated to one of the network units ONU.

Between a time slot and the subsequent one a time interval equal to 8 bit periods (GUARD_TIME), with ±2 bits tolerance, is reserved. The time interval GUARD_TIME allows a given tolerance in determining the moment at which each network unit ONU shall start transmissions.

The value of said delays is stored by the OLT termination during the "coarse ranging" and "static ranging" steps, mentioned above.

Due to temperature variations, the delay of signals crossing the PON network can vary even during the normal operation of the system.

As an effect of these delay variations the receipt moment of the starting of a time slot in the line termination OLT deviates from the nominal value, determined at first during the coarse ranging and static ranging steps.

The OLT termination then sends a request, during the normal operation of the PON network, to the network unit ONU to compensate this delay variation with an equivalent and opposed variation of the transmission starting instant.

Sending of this synchronization information performs the above mentioned "fine ranging" step.

Referring to Fig. 3 the parts of a network unit ONU dedicated to the synchronization of the information flow towards the OLT termination shall be described.

The element of the network unit ONU for the creation and processing of information to transmit to the OLT termination has been labelled as PAR_ONU:

The element PAR_ONU is connected to an element SER_ONU through an elastic memory ELAS_MEM of First-In First-Out type.

The SER_ONU element is a parallel-serial converter, converting data, processed in parallel in a number m of bit from the PAR_ONU element, into the serial format.

Hereafter we shall assume, without limiting the scope of the present invention, that data in the parallel format have parallelism 8 (m=8), therefore we shall mention bytes to indicate a generic data word in parallel format.

The PAR_ONU element is connected to the ELAS_MEM memory through a 8 bit Dk bus and through a wire WR_CK.

The SER_ONU element is connected to the ELAS_MEM memory through a 8 bit Qk bus and through a wire RD_CK.

On the Dk bus transit data coming from the PAR_ONU element, which shall be stored in the ELAS_MEM memory.

Likewise, on the Qk bus transit data, addressed to the SER_ONU element, which are read from the ELAS_MEM memory.

The SER_ONU element receives also a clock signal HF_CK representing the system clock.

The element PAR_ONU generates, through division by 8 of HF_CK, the writing signal WR_CK by means of which parallel data Dk are written in the ELAS_MEM; for the generation of WR_CK an 8 base counter can therefore be used.

In its turn the SER_ONU element generates, through division of HF_CK, the reading signal RD_CK with which parallel data Qk are read by the ELAS_MEM; to this purpose a counter can be used, which, as it shall be clearer hereafter, shall have a variable counting base.

According to the invention, all signal processing operations in the SER_ONU element are minimized, being the major of them developed inside the PAR_ONU element and inside the elastic memory ELAS_MEM.

These processings are therefore made on data transiting at a more reduced speed, being these signals still in the parallel format.

It is therefore possible to appreciate that the possibility to operate on data at reduced speed, enables the use of circuitry based on C-MOS technologies in the implementation of the PAR_ONU element and of the ELAS_MEM memory.

As it is well known, these C-MOS technologies result being of low cost and particularly suitable to reduce consumptions of electric power.

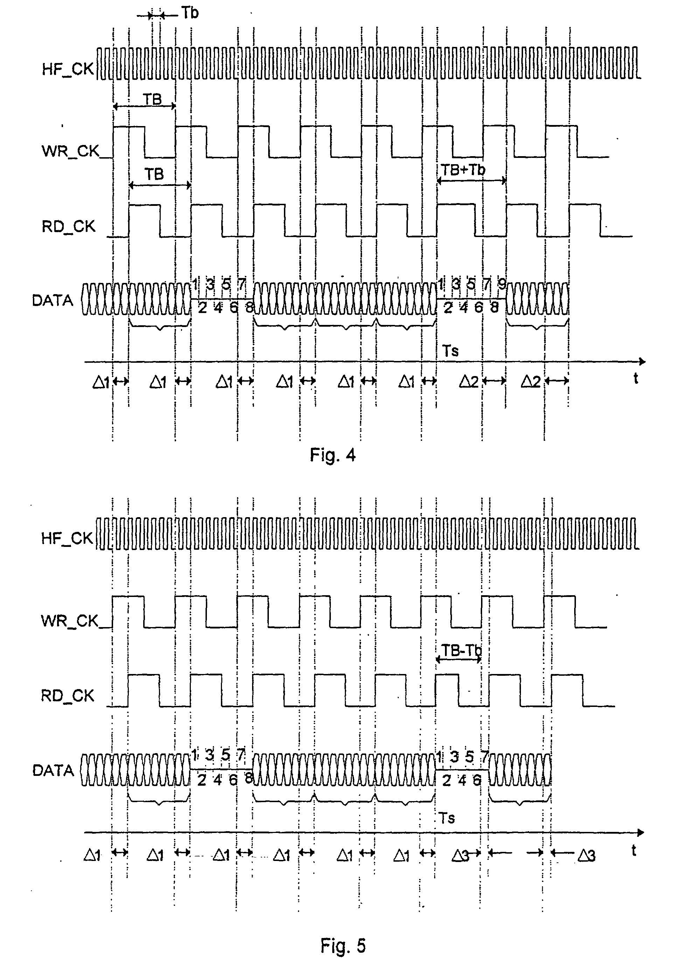

Referring to the attached Figures 4. 5 and 6, we shall describe the operation of the transmission portion of the network unit shown in Fig. 3.

According to the invention, timing of signals transiting on the DATA output is changed anticipating or delaying the reading of the ELAS_MEM through a modification of the phase of the reading clock RD_CK, in response to synchronization information arriving from the line termination OLT.

In fact WR_CK and RD_CK signals representing the clocks with which data in the parallel format Dk and Qk are entered and read from the ELAS_MEM, respectively.

Therefore, determining a variation of phase shift between these two signals WR_CK and RD_CK a consequent variation is obtained of the time phase shift between writing and reading operations of data Dk and Qk.

This phase variation on data in the parallel format, heaving the signal WR_CK a fixed phase compared to the system clock HF_CK, results, after the parallel/serial conversion made by the SER_ONU element, in a variation of DATA signal timing (versus the reference signal HF_CK, representing the system clock).

Advantageously the great part of operations leading to introduce this phase shifting and to determine the relevant value are carried out inside the PAR_ONU element and the ELAS_MEM memory where data are treated in the parallel format.

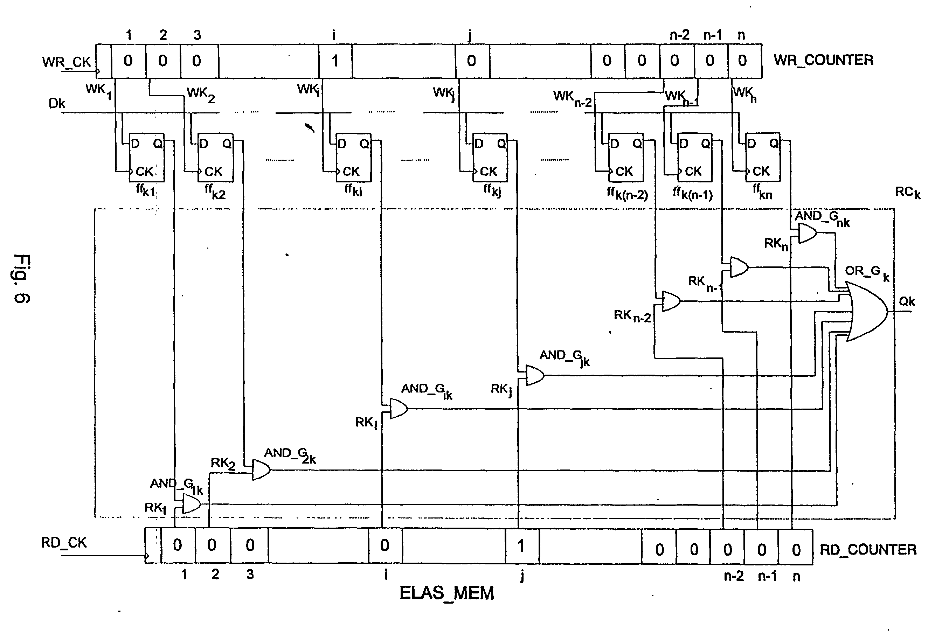

Figures 4 and 5 show the timing of signals transiting, on wires HF_CK, WR_CK, RD_CK, and DATA, respectively.

On the X-axis of diagrams of Fig 4 and 5, time intervals Δ 1, Δ2 and Δ3 have been highlighted, representing the phase differences between the RD_CK signal and the WR_CK signal.

TB indicates the byte period, while Tb indicates the bit period.

When the time instant TS occurs, an additional phase shift is introduced in the RD_CK signal in respect with the WR_CK signal.

This additional phase shift in the RD_CK signal is obtained using, for a complete count cycle, a 9 count basis (instead of 8) in the divisor of the reference signal HF_CK placed in the SER_ONU signal.

In the diagram of Fig. 4 this phase shift is equal to a bit time period Tb. The initial phase shift Δ1 between the RD_CK signal and the WR_CK signal increases and reached the Δ2 value, equal in this case to Δ1+Tb.

Due to the introduction of this additional phase shift, in the DATA signal a delay equal to a bit period Tb is introduced. In Fig. 4 it can be noticed that, after the time instant Ts, the GUARD_TIME interval between two consecutive packages of data, increases from 8 to 9 bits.

In the diagram of fig. 5, on the contrary, the additional phase shift between WR_CK and RD_CK is formed by a decrease of a bit time Tb. The initial phase shift Δ1 between the RD_CK signal and the WR_CK signal therefore decreases and reaches the Δ3 value, equal in this case to Δ1-Tb.

This phase shift of the RD_CK signal is obtained using, for a complete counting cycle, a 7 count basis (instead of 8) in the divisor of the reference signal HF_CK placed in the SER_ONU unit.

Due to the introduction of this phase shift having negative sign, in the DATA signal an advance equal to a Tb bit period is introduced. In Fig. 5 we can notice that, after the time instant Ts, the GUARD_TIME interval between two consecutive packages of signals decreases from 8 to 7 bits.

With reference to figures 6 to 8 the characteristics of the method according to the present invention shall now be described more in detail.

The elastic memory ELAS_MEM is represented in Fig. 6

The structure is first described and then the operation.

The ELAS_MEM memory has n bytes capacity and includes 8*n flip flops with data inputs connected to the 8 wire DK bus and outputs connected to the QK bus, two n basis counters and a combining network RC.

In particular the following is represented in fig. 6:
- n flip flops (of total 8*n) connected to a sole wire DK among the 8 wires belonging to the DK bus. These flip flops have been labelled with ffk1,....ffkn;
- the two n basis counters (labelled in the figure as WR_COUNTER and RD_COUNTER);
a subassembly of the combining network RC (labelled in the figure with RCₖ).

The n enabling inputs of flip flops ffk1,...ffkn are connected to the n outputs WK1,....WKn of the writing counter WR_COUNTER.

The writing counter WR_COUNTER receives the WR_CK signal as clock signal.

The remaining 7*n flip flops, not indicated, are connected to the n outputs WK1,...WKn of the writing counter WR_COUNTER in the same way as flip flops ffk1, ...,ffkn.

The reading counter RD_COUNTER receives the RD_CK signal as clock signal.

The n outputs of flip flops ffk1, ...,ffkn and the n outputs RK1,...,RKn of the reading counter RD_COUNTER are connected to the inputs of the combining network RCₖ.

The RC network consists of 8 lines of AND logic gates (one only there represented) having two inputs (where each line includes n logic gates), indicated with AND_G₁ₖ, ..., AND_Gₙₖ, and 8 OR logic gates having n inputs, one only there represented and labelled OR_Gₖ.

One of the two inputs of AND logic gates is connected to the output of a relevant flip flop.

The other input of AND logic gates is connected to a relevant output between the n outputs RK₁, ..., RKₙ of the reading counter RD_COUNTER.

The outputs of ports AND_G₁ₖ, ..., AND_Gₙₖ are connected to a corresponding input between the n inputs of the logic gate OR_Gₖ.

The RC network consists therefore of 8*n AND logic gates having two inputs and of 8 OR logic ports having n inputs.

The 7*n AND logic ports and the 7 OR logic gates not indicated in the figure are connected to flip flops and to outputs RK₁,...RKₙ of the reading counter RD_COUNTER similarly to ports AND_G₁ₖ,...,AND_Gₙₖ and to the gate OR_Gₖ.

The eight outputs of the light OR_Gₖ gates form the eight wire outputs bus Qk.

The elastic memory ELAS_MEM operates as follows.

The writing counter WR_COUNTER receives as clock signal the signal present on the wire WR_CK and generates on its n outputs the same number of periodic signals (of n*TB period) labelled WK1,...,WKn. These signals show a unique active interval having duration equal to TB, in such a way that this interval on the WKᵢ signal follows that of WKᵢ₋₁ and preceeds the WKᵢ₊₁ one.

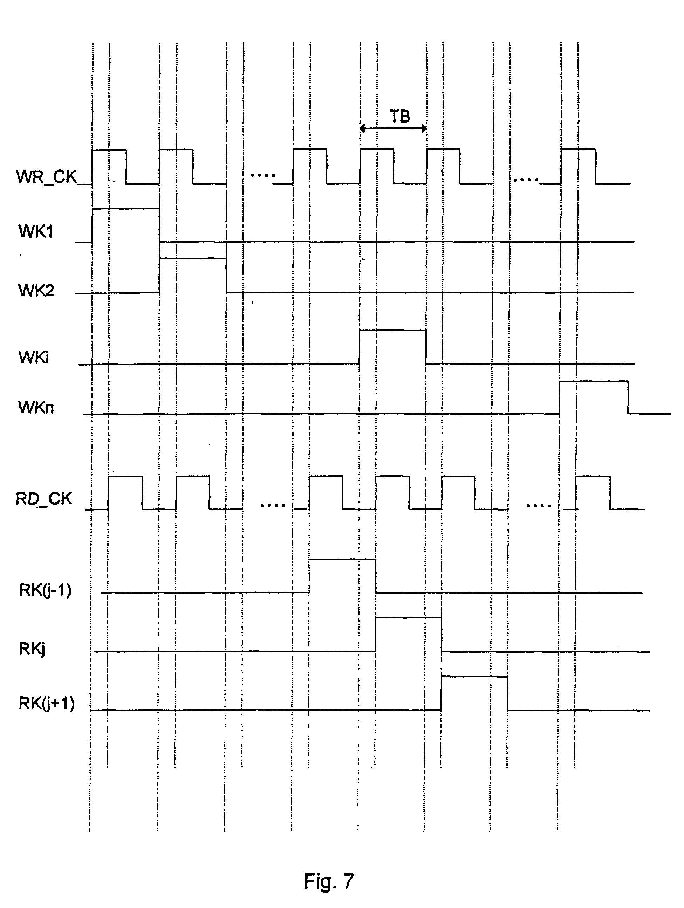

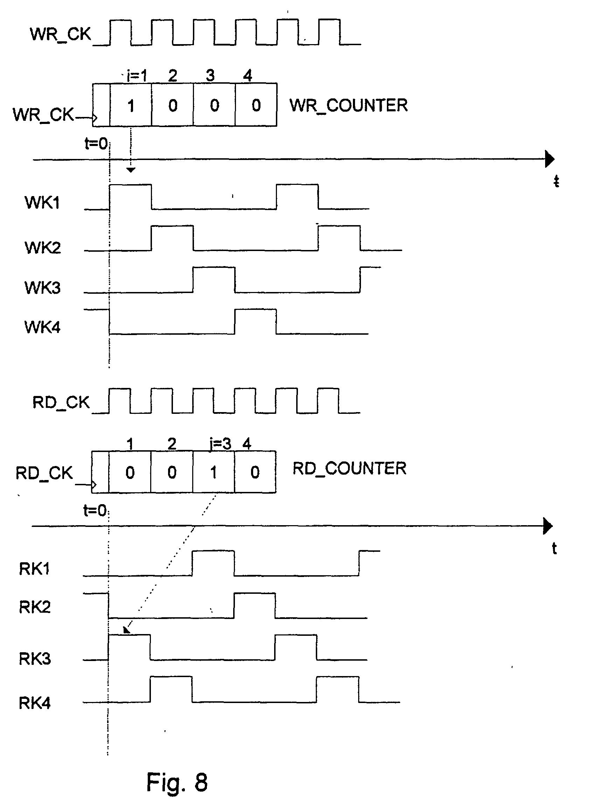

The trend in time of the succession of signals WK₁,...,WKₙ is shown in Fig. 7 and in Fig. 8. A particular case has been shown in Fig. 8, where n was equal to 4.

The reading counter RD_COUNTER on the contrary, receives as clock signal the signal present on the wire RD_CK.

The RD_COUNTER, likewise the writing counter WR_COUNTER, generates on its n outputs, a same number of periodic signals (of n*TB period) called RK₁,...,RKₙ. These signals show a sole active interval having duration equal to TB, in such a way that this interval on the RKᵢ signal follows that of RKᵢ₋₁and preceeds the RDᵢ₊₁ one.

During a generic period having TB duration, one only among signals WK1,...,WKn shows an active front. In Figures 7 and 8 this signal having been labelled WKi, while the status of the writing counter WR_COUNTER during this generic period TB has been symbolically represented in Fig. 6 with the insertion of "1" in the count i-th position.

During the same generic duration period TB, one only among signals RK1,...,RKn shows an active interval. In Fig. 7 and 8 this signal has been indicated with RKj, while the status of the reading counter RD_COUNTER during this generic period TB has been symbolically represented in Fig. 6 with the insertion of "1" in the count j-th position.

During this generic duration period TB, due to the high logic signal on wire WKi, the byte available on the bus Dk is stored in the 8 flip flops connected to the WKi wire.

During the same generic duration period TB, due to the high logic signal on wire RKj, the byte stored in the 8 flip flops connected to the WKj wire is brought to the output on the Qk bus through the combining network RC.

During the subsequent TB period a byte is written in the flip flops connected to the wire WKi+1 and a byte stored in the flip flops connected to the WKj+1 wire is brought to output.

Through adequate initialization of the two counters WR_COUNTER and RD_COUNTER and duly selecting the value to be assigned to n (that is, adequately dimensioning the elastic memory ELAS_MEM), it is possible to manage writing operations in flip flops composing the same in order that the same are always performed on different moments in respect with reading operations on the same flip flops.

When a network unit ONU receives a synchronization information from the line unit OLT following which, it is necessary to make a phase change in the serial data flow DATA, the SER_ONU element performs a modification in the phase of the RD_CK signal equal to the required phase change.

Being the RD_CK signal the clock signal with which the SER_ONU element reads signals present on the Qk bus, a phase variation on the RD_CK involves a corresponding phase variation in the serial data flow DATA.

In the elastic memory all the corrections which are made during the time to the RD_CK signal, cause a corresponding phase shifting of RKₖ signal compared to WKₖ signals and a variation of the quantity |i-j|. In practice, after 8 consecutive phase corrections in the same direction (that is after having modified the phase of the serial flow DATA of a byte in advance or delayed) the |i-j| quantity increases by one unit.

In the hypothesis that the initial phase Δ1 between the RD_CK signal and the WR_CK signal is null and that n is even, initializing the writing counter WR_COUNTER and the reading counter RD_COUNTER in such a way that |i-j| =n/2 the system allows a phase change of the serial data flow DATA equal to (n/2-1 )*8*TB.

The advantages of the invention are evident.

Thanks to a such a method, the phase variation of the high speed data flow DATA is made operating on the RD_CK signal.

Should an 8 parallelism level be employed, this signal RD_CK results 8 times lower than the DATA signal.

This allows to employ low cost and low electric power consumption components.

It is possible to appreciate that the ELAST_MEM device consists of a reduced number of components, such as counters, flip flops and logic gates, which can be easily procured at a low cost.

## Claims

1. Method for synchronizing serial digital signal transmissions in a communication system including a passive optical network (PON) connecting point-to-multipoint a line termination (OLT) to a plurality of network units (ONU) accessing the network in time division:
- the line termination (OLT) being of the type which transmits to each network unit (ONU) relevant synchronization information for assigning the time instant of the subsequent transmission specifying either a time advance or delay value;
- the network units (ONU) being of the type including an elastic memory (ELAS_MEM) to absorb variations in transmission delay upon the reception of said synchronization information ,
**characterized in that** each network unit (ONU) performs the steps of:
- assembling into m-bit parallel words (Dk) data to be transmitted to the line termination (OLT);
- storing into the elastic memory (ELAS_MEM) the m-bit parallel words (Dk) using a write clock (WR_CK) obtained dividing by m the system clock (HF_CK);
- reading parallel words (Qk) from said elastic memory (ELAS_MEM) using a read clock (RD_CK) whose phase with respect to the write clock (WR_CK) is modified dividing by m-1 or m+1 said system clock (HF_CK) in response to the receipt of the advance or delay value;
- serializing said parallel words (Qk) read from the elastic memory (ELAS_MEM) using said system clock (HF_CK) and transmitting the serial data (DATA) to the line termination (OLT).

2. The method of the preceding claim, **characterized in that** each network unit (ONU) is enabled to transmit data only in time slots assigned by the line termination (OLT).

3. The method of the preceding claim, **characterized in that** between a time slot and the subsequent one a nominal guard time interval (GUARD_TIME) at least equal to m periods of said system clock (HF_CK) is reserved.

4. Arrangement for synchronizing serial digital signal transmissions in a communication system including a passive optical network (PON) connecting point-to-multipoint a line termination (OLT) to a plurality of network units (ONU) accessing the network in time division, including:
- means of the line termination (OLT) to check the transmission delay of each network unit (ONU) and forwarding to them relevant synchronization information for assigning the time instant of the subsequent transmission specifying either a time advance or delay value;
- elastic memory means of each network unit (ONU) arranged to absorb variations in the transmission delay upon the reception of said synchronization information,
**characterized in that** said elastic memory means of each network unit (ONU) includes:
- a fixed counting base clock divisor (PAR_ONU) which divides by m the system clock (HF_CK) in order to obtain a write clock (WR_CK) to store m-bit parallel data words (Dk) into a sequential memory (ELAS_MEM);
- a variable counting base clock divisor (SER_ONU) which divides by m-1 or m+1 the system clock (HF_CK) in response to the receipt of the advance or delay value, in order to obtain a read clock (RD_CK) of said sequential memory (ELAS_MEM) which phase with respect to the write clock (WR_CK) is modified accordingly;
- parallel to serial conversion means (SER_ONU) for serializing and forwarding to the line termination (OLT) said parallel words (Qk) read from the sequential memory (ELAS_MEM) using said system clock (HF_CK).

5. Arrangement of the preceding claim, **characterized in that** said sequential memory (ELAS_MEM) is of the FIFO type.

6. Arrangement of the preceding claim, **characterized in that** said sequential memory (ELAS_MEM) includes:
- a writing counter (WR_COUNTER) receiving at input said write clock (WR_CK);
- a reading counter (RD_COUNTER) receiving at input said read clock (RD_CK);
- m lines of memory elements (ff), each one receiving on the data input a relevant bit of an assembled data word and on the timing input a relevant output of the writing counter (WR_COUNTER);
- m lines of logic units of AND type (AND_G) heaving the first input connected to the output of a corresponding memory element (ff) and the second input connected to a corresponding output of the reading counter (RD_COUNTER);
- m logic units of OR type (OR_G) each one receiving at input the outputs of a relevant line of said logic units of AND type (AND_G).

## Patentansprüche

1. Verfahren zur Synchronisation serieller digitaler Signalübertragungen in einem Kommunikationssystem, welches ein passives optisches Netz (PON) umfasst, das mittels Punkt-zu-Mehrpunkt-Verbindung einen Leitungsabschluss (OLT) mit einer Vielzahl von Netzwerkeinheiten (ONU) verbindet, die im Zeitmultiplex auf das Netz zugreifen:
- wobei der Leitungsabschluss (OLT) von einem Typ ist, welcher an jede Netzwerkeinheit (ONU) entsprechende Synchronisations-Informationen für die Zuweisung des Zeitpunktes der nachfolgenden Übertragung mit Angabe des Wertes entweder einer zeitlichen Vorverschiebung oder einer Verzögerung sendet;
- wobei die Netzwerkeinheiten (ONU) von einem Typ sind, welcher einen dynamischen Speicher (ELAS_MEM) umfasst, um Schwankungen der Übertragungsverzögerung beim Empfang der besagten Synchronisations-Informationen zu absorbieren;
**dadurch gekennzeichnet, dass** jede Netzwerkeinheit (ONU) die folgenden Schritte ausführt:
- Umwandlung von Daten, die zum Leitungsabschluss (OLT) zu übertragen sind, in parallele Worte (Dk) mit m Bits;
- Speichern der parallelen Worte (Dk) mit m Bits im dynamischen Speicher (ELAS_MEM) unter Verwendung eines Schreibetaktes (WR_CK), der durch Division des Systemtaktes (HF_CK) durch m erhalten wird;
- Lesen von parallelen Worten (Qk) aus dem besagten dynamischen Speicher (ELAS_MEM) unter Verwendung eines Lesetaktes (RD_CK), dessen Phase in Bezug auf den Schreibetakt (WR_CK) verändert ist, indem der besagte Systemtakt (HF_CK) in Reaktion auf den Empfang des Voreilungs- oder Verzögerungswertes durch m-1 oder m+1 dividiert wird;
- Serialisierung der besagten, aus dem dynamischen Speicher (ELAS_MEM) gelesenen parallelen Worte (Qk) unter Verwendung des besagten Systemtaktes (HF_CK) und Übertragung der seriellen Daten (DATA) zum Leitungsabschluss (OLT).

2. Verfahren nach dem vorhergehenden Anspruch, **dadurch gekennzeichnet, dass** jede Netzwerkeinheit (ONU) in die Lage versetzt wird, Daten nur in Zeitschlitzen zu übertragen, die vom Leitungsabschluss (OLT) zugewiesen wurden.

3. Verfahren nach dem vorhergehenden Anspruch, **dadurch gekennzeichnet, dass** zwischen einem Zeitschlitz und dem nachfolgenden ein Zeitintervall (GUARD_TIME) mit einer Länge von wenigstens m Perioden des besagten Systemtaktes (HF_CK) reserviert wird.

4. Anordnung zur Synchronisation serieller digitaler Signalübertragungen in einem Kommunikationssystem, welches ein passives optisches Netz (PON) umfasst, das mittels Punkt-zu-Mehrpunkt-Verbindung einen Leitungsabschluss (OLT) mit einer Vielzahl von Netzwerkeinheiten (ONU) verbindet, die im Zeitmultiplex auf das Netz zugreifen, welche umfasst:
- Mittel des Leitungsabschlusses (OLT) zum Prüfen der Verzögerung der Übertragung der einzelnen Netzwerkeinheiten (ONU) und Übermitteln entsprechender Synchronisations-Informationen an sie für die Zuweisung des Zeitpunktes der nachfolgenden Übertragung mit Angabe des Wertes entweder einer zeitlichen Vorverschiebung oder einer Verzögerung;
- dynamische Speichermittel der einzelnen Netzwerkeinheiten (ONU), die so beschaffen sind, dass sie Schwankungen der Übertragungsverzögerung beim Empfang der besagten Synchronisations-Informationen absorbieren;
**dadurch gekennzeichnet, dass** das besagte dynamische Speichermittel jeder Netzwerkeinheit (ONU) umfasst:
- einen Taktteiler mit fester Zählbasis (PAR_ONU), welcher den Systemtakt (HF_CK) durch m dividiert, um einen Schreibetakt (WR_CK) zum Speichern von parallelen Datenworten (Dk) mit m Bits in einem sequentiellen Speicher (ELAS_MEM) zu erhalten;
- einen Taktteiler mit variabler Zählbasis (SER_ONU), welcher den Systemtakt (HF_CK) in Reaktion auf den Empfang des Voreilungsoder Verzögerungswertes durch m-1 oder m+1 dividiert, um einen Lesetakt (RD_CK) zum Lesen aus dem besagten sequentiellen Speicher (ELAS_MEM) zu erhalten, dessen Phase in Bezug auf den Schreibetakt (WR_CK) entsprechend verändert ist;
- Mittel zur Parallel-Seriell-Umsetzung (SER_UNO) zur Serialisierung der besagten, aus dem sequentiellen Speicher (ELAS_MEM) gelesenen parallelen Worte (Qk) unter Verwendung des besagten Systemtaktes (HF_CK) und zur Übertragung derselben zum Leitungsabschluss (OLT).

5. Anordnung nach dem vorhergehenden Anspruch, **dadurch gekennzeichnet, dass** der besagte sequentielle Speicher (ELAS_MEM) ein FIFO-Speicher ist.

6. Anordnung nach dem vorhergehenden Anspruch, **dadurch gekennzeichnet, dass** der besagte sequentielle Speicher (ELAS_MEM) umfasst:
- einen Schreibzähler (WR_COUNTER), der am Eingang den besagten Schreibetakt (WR_CK) empfängt;
- einen Lesezähler (RD_COUNTER), der am Eingang den besagten Lesetakt (RD_CK) empfängt;
- m Zeilen von Speicherelementen (ff), die jeweils am Dateneingang ein entsprechendes Bit eines umgewandelten Datenwortes und am Takteingang einen entsprechenden Ausgang des Schreibzählers (WR_COUNTER) empfangen;
- m Zeilen von UND-Verknüpfungsgliedern (AND_G), bei denen der erste Eingang an den Ausgang eines entsprechenden Speicherelements (ff) und der zweite Eingang an einen entsprechenden Ausgang des Lesezählers (RD_COUNTER) angeschlossen ist;
- m ODER-Verknüpfungsglieder (OR_G), von denen jedes am Eingang die Ausgänge einer entsprechenden Zeile der besagten UND-Verknüpfungsgliedern (AND_G) empfängt.

## Revendications

1. Procédé pour synchroniser des transmissions de signaux numériques en série dans un système de communication comprenant un réseau optique passif (PON) reliant en mode point à multipoint une terminaison de ligne (OLT) à une pluralité d'unités de réseau (ONU) accédant au réseau par répartition dans le temps :
- la terminaison de ligne (OLT) étant du type qui transmet à chaque unité de réseau (ONU) des informations pertinentes de synchronisation pour fixer l'instant de la transmission suivante en spécifiant une valeur d'avance ou de retard dans le temps ;
- les unités de réseau (ONU) étant du type comprenant une mémoire à dimensions variables (ELAS_MEM) pour mémoriser les variations du délai de transmission à la réception desdites informations de synchronisation,
**caractérisé en ce que** chaque unité de réseau (ONU) exécute les étapes consistant à :
- assembler en mots parallèles à m bits (Dk) les données à transmettre à la terminaison de ligne (OLT) ;
- stocker dans la mémoire à dimensions variables (ELAS_MEM) les mots parallèles à m bits (Dk) en utilisant une horloge d'écriture (WR_CK) obtenue en divisant par m l'horloge système (HF_CK) ;
- lire les mots parallèles (Qk) dans ladite mémoire à dimensions variables (ELAS_MEM) en utilisant une horloge de lecture (RD_CK) dont la phase, par rapport à l'horloge d'écriture (WR_CK), est modifiée en divisant par m-1 ou m+1 ladite horloge système (HF_CK) en réaction à la réception de la valeur d'avance ou de retard ;
- sérialiser lesdits mots parallèles (Qk) lus dans la mémoire à dimensions variables (ELAS_MEM) en utilisant ladite horloge système (HF_CK) et en transmettant les données en série (DATA) à la terminaison de ligne (OLT).

2. Procédé selon la revendication précédente, **caractérisé en ce que** chaque unité de réseau (ONU) n'est autorisée à transmettre des données que dans les tranches de temps attribuées par la terminaison de ligne (OLT).

3. Procédé selon la revendication précédente, **caractérisé en ce que**, entre une tranche de temps et la suivante, un intervalle formant temps de garde nominal (GUARD_TIME) au moins égal à m périodes de ladite horloge système (HF_CK) est réservé.

4. Montage pour synchroniser des transmissions de données numériques en série dans un système de communication comprenant un réseau optique passif (PON) reliant en mode point à multipoint une terminaison de ligne (OLT) à une pluralité d'unités de réseau (ONU) accédant au réseau par répartition dans le temps, comprenant :
- des moyens de terminaison de ligne (OLT) pour vérifier le délai de transmission de chaque unité de réseau (ONU) et leur envoyer des informations pertinentes de synchronisation pour fixer l'instant de la transmission suivante en spécifiant une valeur d'avance ou de retard dans le temps ;
- des moyens formant mémoire à dimensions variables de chaque unité de réseau (ONU) conçus pour mémoriser les variations du délai de transmission à la réception desdites informations de synchronisation,
**caractérisé en ce que** lesdits moyens formant mémoire à dimensions variables de chaque unité de réseau (ONU) comprennent :
- un diviseur d'horloge à base de comptage fixe (PAR_ONU) qui divise par m l'horloge système (HF_CK) afin d'obtenir une horloge d'écriture (WR_CK) pour mémoriser des mots de données parallèles à m bits (Dk) dans une mémoire séquentielle (ELAS_MEM) ;
- un diviseur d'horloge à base de comptage variable (SER_ONU) qui divise par m-1 ou m+1 l'horloge système (HF_CK) en réaction à la réception de la valeur d'avance ou de retard, afin d'obtenir une horloge de lecture (RD_CK) de ladite mémoire séquentielle (ELAS_MEM) dont la phase, par rapport à l'horloge d'écriture (WR_CK), est modifiée en conséquence ;
- un moyen de conversion parallèle/série (SER_ONU) pour sérialiser et envoyer à la terminaison de ligne (OLT) lesdits mots parallèles (Qk) lus dans la mémoire séquentielle (ELAS_MEM) en utilisant ladite horloge système (HF_CK).

5. Montage selon la revendication précédente, **caractérisé en ce que** ladite mémoire séquentielle (ELAS_MEM) est du type FIFO.

6. Montage selon la revendication précédente, **caractérisé en ce que** ladite mémoire séquentielle (ELAS_MEM) comprend :
- un compteur d'écriture (WR_COUNTER) recevant en entrée ladite horloge d'écriture (WR_CK) ;
- un compteur de lecture (RD_COUNTER) recevant en entrée ladite horloge de lecture (RD_CK) ;
- m lignes d'éléments de mémoire (ff), chacune recevant à l'entrée de données un bit correspondant d'un mot de données assemblé et à l'entrée de synchronisation une sortie correspondante du compteur d'écriture (WR_COUNTER) ;
- m lignes d'unités logiques du type ET (AND_G) ayant une première entrée reliée à la sortie d'un élément de mémoire correspondant (ff) et une seconde entrée reliée à une sortie correspondante du compteur de lecture (RD_COUNTER) ;
- m unités logiques du type OU (OR_G), chacune recevant en entrée les sorties d'une ligne correspondante desdites unités logiques du type ET (AND_G).
